## Europäisches Patentamt
## European Patent Office
## Office européen des brevets

(19)

(11) Publication number: **0 107 298**
**B1**

(12) **EUROPEAN PATENT SPECIFICATION**

(45) Date of publication of patent specification: **09.12.87**

(21) Application number: **83305038.8**

(22) Date of filing: **01.09.83**

(51) Int. Cl.⁴: **F 24 F 1/02, F 24 F 7/007, F 24 F 13/02**

(54) Air cleaning apparatus.

(30) Priority: **06.09.82 JP 155076/82**

(43) Date of publication of application:
**02.05.84 Bulletin 84/18**

(45) Publication of the grant of the patent:
**09.12.87 Bulletin 87/50**

(84) Designated Contracting States:
**DE FR GB IT**

(56) References cited:
**CH-A- 381 395**
**DE-B-1 259 076**
**DE-U-7 430 376**
**FR-A-2 465 166**

(73) Proprietor: **Hirayama, Shyoji**
**No.3-12-14, Chuorinkan**
**Yamato-shi Kanagawa-ken (JP)**

(72) Inventor: **Hirayama, Shyoji**
**No.3-12-14, Chuorinkan**
**Yamato-shi Kanagawa-ken (JP)**

(74) Representative: **Hartley, David et al**
**c/o Withers & Rogers 4 Dyer's Buildings Holborn**
**London, EC1N 2JT (GB)**

Courier Press, Leamington Spa, England.

## Description

This invention relates to a room adapted by the installation of air cleaning apparatus to serve as a clean room, particularly dust-free and sterile clean rooms such as used when handling food and dangerous materials.

It is known from DE—A—7 430 376 to install in a room, a free standing air conditioning unit in the form of a columnar body having air circulating means communicating with an air inlet at low level and supplying diffuser outlets at high level for the discharge into the room of conditioned air cleaned by an air cleaner.

Similarly conventional air cleaners for clean rooms, have a high level air diffuser exit and a low level air suction port, an air circulation blower, an air cleaning filter and/or an air conditioner as required. The area of the clear air diffuser exit is generally small and hence the circulation of clean air may be insufficient to obtain an adequately clean room.

Further, in conventional air cleaning apparatus an air duct is arranged in a ceiling or in the wall of a clean room, an air diffuser port is formed on the ceiling or on the surface of a wall, and clear air from the air cleaning apparatus is fed through the duct and the air diffuser port into the room to be cleaned. Although the area of the clean air diffuser port may be sufficient, it is necessary to arrange the duct in the ceiling or in the wall and the clear air diffuser port on the surface of the ceiling or the wall. Installation is therefore complicated and expensive, particularly in an existing building, since it is in that case necessary to bury the ducting in the ceiling and to embed the diffuser port in the ceiling or the wall.

One object of the present invention is to provide a clean room installation in which the air cleaning apparatus can incorporate diffusion outlets sufficient to provide the required amount of clean air and enable any room in an existing building to be converted for use as a clean room simply and rapidly regardless of the size and the shape of the room.

Another object is to facilitate checking and maintenance of the air cleaning apparatus following installation.

According to the present invention we propose a room adapted to serve as a clean room by having installed therein air cleaning apparatus comprising a columnar body housing air circulating means communicating with an air inlet and supplying at least one duct having clean air diffuser outlets arranged along the length thereof for the discharge into the room or air cleaned by an air cleaner arranged between the air circulating means and the air diffuser outlets wherein the columnar body is disposed to stand vertically in the room characterised in that the columnar body is of the same height as the room and that the duct is connected to the top of the columnar body such that the duct having a flat upper surface extends horizontally from the columnar body across the ceiling with the said upper surface in contact therewith that the diffuser outlets are arranged along the length thereof and that the air cleaner is arranged between the air circulating means and the air diffuser outlets.

In use the apparatus is preferably installed within a room to be cleaned, with the columnar body secured to a wall of the room, preferably in a corner thereof or midway along one wall. Any number of columnar bodies and ducts connected thereto may be used, these preferably being connected together in L-, T-, U- or E-shaped configurations or units. Also, a plurality of units may be installed within the room.

In the preferred embodiments the duct or ducts have an inverted trapezoidal cross-section tapering at one or both sides of the duct depending upon the intended disposition of the duct within the room. The air diffuser outlets are arranged in the lower side and in the inclined or tapered side or sides of the trapezoidal cross-section so as to direct air downwardly in different directions.

Diffuser outlets may be distributed along the whole length of the duct to ensure adequate discharge of air into the room, and preferably comprise perforations in the duct wall.

Since the columnar body (or bodies) stand within the room to be cleaned and the ducts extend along the lower surface of the ceiling, installation of the apparatus is a simple operation, not requiring excavation of the walls or ceiling, enabling any room, in an existing building to be converted to a clean room at relatively little cost.

Other features of the invention are set forth in the appendant claims.

Embodiments of the present invention will now be described by way of example with reference to the accompanying drawings in which:

Figure 1 is a front view of an air cleaning unit for a clean room;

Figure 2 is a side view of the apparatus in Figure 1;

Figure 3 is a cross-section of an air duct;

Figure 4 is a cross-section of another duct;

Figures 5 to 7 show various configurations of air cleaning units of the invention;

Figures 8 to 10 are schematic cross-sectional side and plan views respectively of a clean room in which air cleaning units according to the invention are installed;

Figures 11 and 12 illustrate other installations of air cleaning units according to the invention.

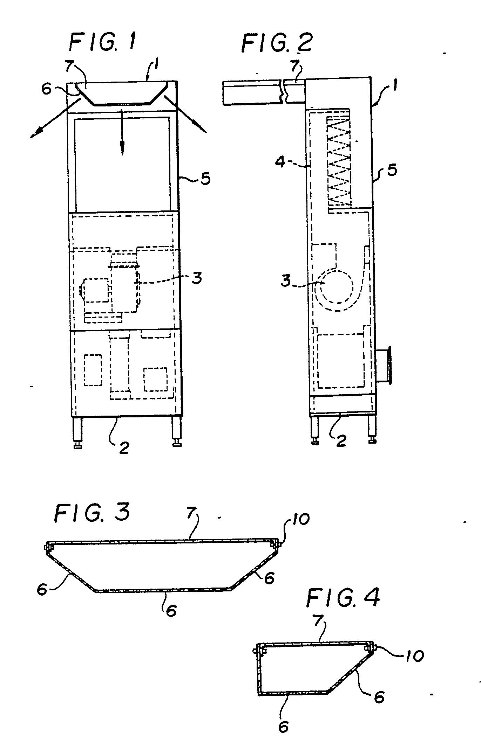

The air cleaning apparatus 1 shown in Figures 1 and 2 has an air suction port 2 at the bottom of a columnar body 5, a blower 3 above the suction port 2 for circulating the air, an air cleaner or filter 4 for collecting dust above the blower 3 in the body 5, and a clear air duct 7 connected to and extending horizontally away from the upper end of the body 5 and having clean air diffuser outlets 6 in the side and lower surfaces thereof, from which clean air is discharged as indicated by the arrows in Figure 1.

In the illustrated embodiments, the duct 7 is substantially trapezoidal in cross-section and may taper at each side face as shown in Figure 3 or at one side face only as shown in Figure 4. Diffuser outlets 6 in the form of perforations or openings in the duct wall are distributed along the lower face and tapered side face (Figure 4) or faces (Figure 3). Perforations or openings may be provided over substantially the entire area of these faces in order to obtain the required discharge and diffusion of clean air into the room.

In general, the cross-sectional shape of the duct 7 depends upon the intended disposition of the air cleaning apparatus within the room. It will, for example, be understood, that the duct shown in Figure 4 is suitable when the duct 7 is to be disposed in the corner between a wall and the ceiling of a room.

To provide access to the interior of the duct 7 for checking, cleaning and maintenance, plates which are perforate or porous, to provide diffuser outlets 6, are secured by screws or bolts 10 and/or by a hinge or hinges (not shown).

In the embodiment described above, the air cleaning filter 4 is installed in the body 5 above the blower 3. The filter 4 may, however, be arranged in any suitable position. It may, for example, be arranged in the vicinity of the inlet end of the duct 7 or in the vicinity of the air diffuser outlets 6.

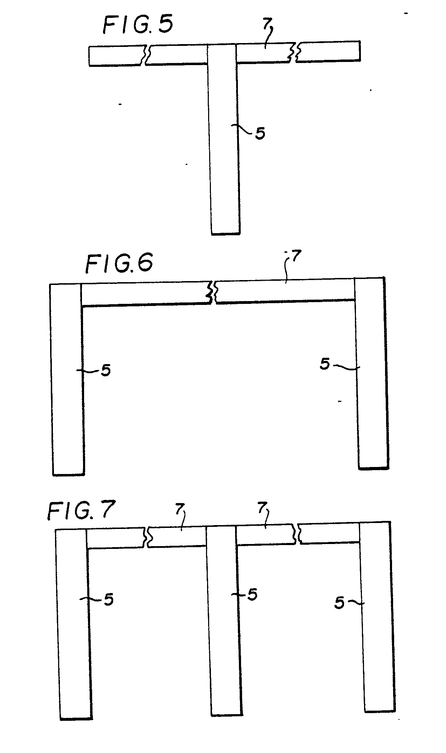

Air cleaning apparatus according to the present invention may have any number of columnar bodies 5 and ducts 7 and these may be connected together in any desired configuration, for example, an inverted L shape in which the duct 7 extends laterally of the body 5 as shown in Figure 1, a T-shape in which the duct 7 extends horizontally from both sides as shown in Figure 5, an inverted U-shape in which the duct 7 bridges two columnar bodies as shown in Figure 6, or an E-shape having three columnar bodies 5 and two ducts 7 as shown in Figure 7. The particular configuration is selected according to the shape and the size of the room to be cleaned.

Since a clean room for the food industry requires dust-free and sterile clean air, it is preferred to provide a sterilizer or a pasteurizer downstream of the filter 4 or in the vicinity of the duct 7. Further, the apparatus may also include an air conditioner housed within the body 5.

In operation, the air in the room to be cleaned is drawn by the blower 3 through the air duction port 2 into the body 5, and is then fed through the filter 4 to remove entrained dust, before passing through a sterilizer or pasteurizer if provided. Clean air thus treated is then fed into the duct 7 and passed through the diffuser outlets 6 into the room. There is constant recirculation of the air through the air cleaning apparatus 1 in the manner described above so as to keep the air in the room clean.

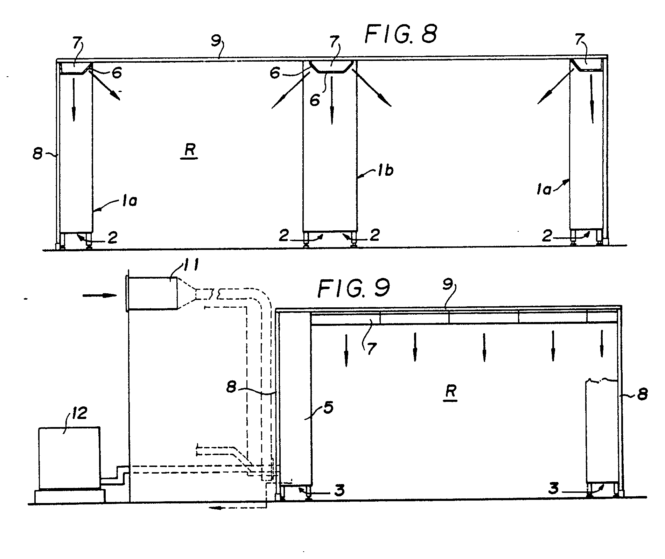

Figures 8, 9 and 10 show a preferred arrangement of air cleaning apparatus 1 within a room to be cleaned. Each of the three apparatus units has a generally U-shaped configuration as shown in Figure 6, the units being disposed one at each end and one midway along the length of the room R. The bodies 5 of the units 1 are clamped to the walls 8 by a simple means such as bolts and nuts and the ducts 7 extend along the lower surface of a ceiling 9. The units 1 may be built or designed in advance for installation on site, with the dimensions of the bodies 5 and the ducts 7 adapted to suit the dimensions of the room R.

In the embodiments described above, the air cleaning units 1a at opposite ends of the room each have two bodies 6 and a single duct 7 extending along the ceiling in the corner between the ceiling and the wall. The duct section is of inverted trapezoidal shape with one tapered side as shown in Figure 4. The air cleaning unit 1b arranged midway along the room is of the type having the duct section which is also of inverted trapezoidal shape but with two tapered sides as shown in Figure 3. Clean air can thus be diffused into all areas of the room R as illustrated by the arrows in Figure 8.

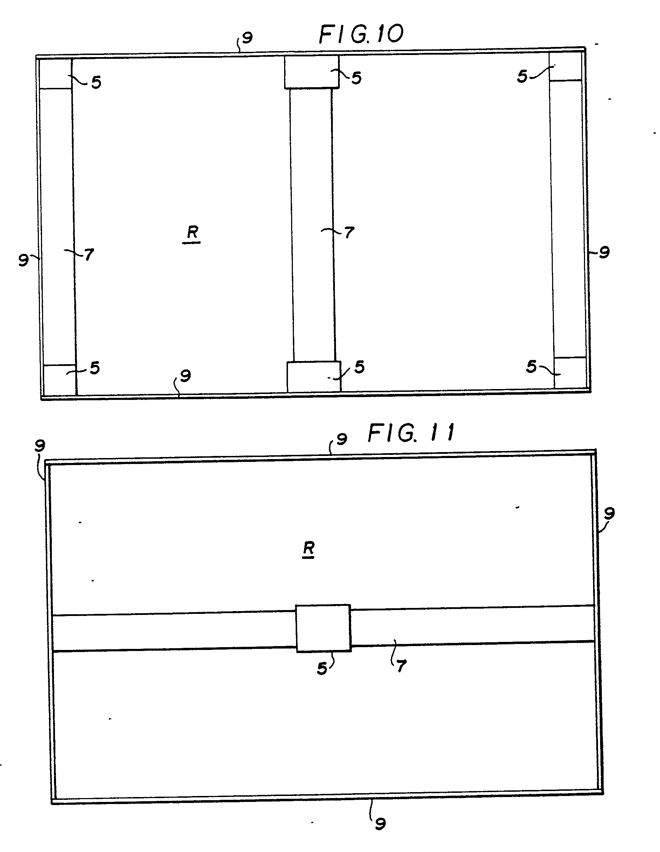

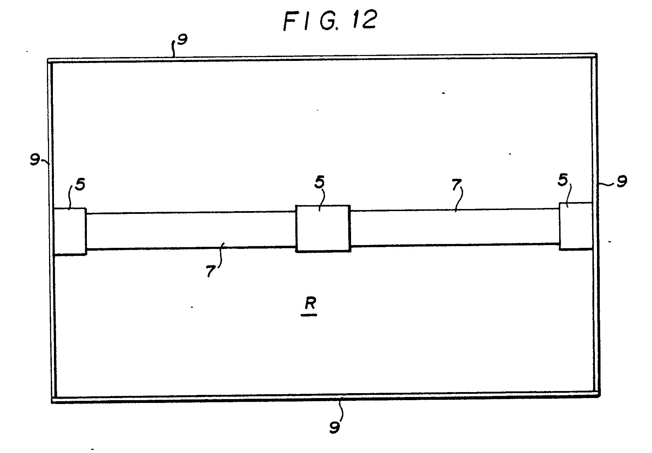

The air cleaning units shown in Figures 5 and 6 may be disposed in the middle of a room R as shown in Figures 11 and 12. In this case, the duct section 7 is of inverted trapezoidal shape with two tapered sides.

If atmospheric air is to be introduced into the room to be cleaned as shown in Figure 9, an external air treating unit 11 is connected, via a water supply pipe passing through the wall to the body 5 of the air cleaning apparatus. Also, an air conditioner may be installed in the body 5 of the air cleaning apparatus, this being connected by pipe 12 to the outer atmospheric air treating unit 12.

As described above, the installation of the air cleaning apparatus involves merely arranging and assembling columnar bodies and ducts selected according to the size and shape of the room, in the desired configuration, with the duct(s) extending from the body(ies) along the lower surface of the ceiling, and clamping the apparatus, using screws, bolts or nuts or other suitable fixing devices, to the walls, ceiling and/or floors as appropriate.

It is not necessary to excavate the ceiling or wall as with conventional apparatus. Further, any room in an existing building can be converted to a clean room regardless of the shape and the size of the room, the time required for and hence also the cost of installation is significantly less than with conventional installations. Checking, cleaning and maintenance of the air cleaning apparatus is facilitated by virtue of the fact that the apparatus is readily accessible within the room.

It will also be understood from the foregoing that by virtue of the structure of air cleaning apparatus of the present invention and the various possible arrangements within the room, the discharge area of the clean air diffuser outlets can be made sufficient to clean the air in the room completely.

**Claims**

1. A room (R) adapted to serve as a clean room by having installed therein air cleaning apparatus (1) comprising a columnar body (5) housing air circulating means (3) communicating with an air inlet (2) and supplying at least one duct (7) having clear air diffuser outlets (6) for the discharge into the room of air cleaned by an air cleaner (4) wherein the columnar body (5) is disposed to stand vertically in the room characterised in that the columnar body (5) is of the same height as the room and that the duct is connected to the top of the columnar body (5) such that the duct having a flat upper surface extends horizontally from the columnar body across the ceiling (9) with the said upper surface in contact therewith, that the air diffuser outlets (6) are arranged along the length thereof and that the air cleaner (4) is arranged between the air circulating means (3) and the air diffuser outlets (6).

2. A room according to claim 1 wherein the duct (7) has an inverted trapezoidal cross-sectional shape which tapers at both sides of the duct (Figure 3), the duct being arranged to extend across the ceiling in the middle of the room.

3. A room according to claim 1 wherein the duct (7) has an inverted trapezoidal cross-sectional shape which tapers at one side only of the duct (Figure 4), the other side forming a right-angle corner with the flat upper surface of the duct, the duct being arranged to extend along the ceiling with the duct corner received in the corner between the ceiling and wall of the room.

4. A room according to any one of claims 1 to 3, in which two columnar bodies (5, Figure 10) are disposed to stand against opposite walls (9) of the room (R), and are connected to opposite ends of a duct (7) extending along the ceiling.

5. A room according to any one of claims 1 to 3 in which the columnar body (5) stands in the middle or midway along a wall (8) of the room (R) and has horizontal ducts (7) extending therefrom in opposite directions across the ceiling (9) to opposite sides or ends of the room (R).

6. A room according to claim 5 wherein two columnar bodies (5) are disposed to stand against opposite walls (8) of the room (R), each being connected to a horizontal duct (7) the other end of which is connected to the columnar body (5) standing in the middle of or midway along the wall (8) between the said opposite walls, of the room (R).

## Patentansprüche

1. Ein als dadurch zum Reinigungsraum bestimmter Raum (R), daß in ihm eine Luftreinigungsvorrichtung installiert ist, die einen säulenförmigen Grundkörper (5) zur Umschließung eines mit einem Lufteinlaß (2) verbundenen und zumindest eine Luftführungskanal (7) mit Luftdiffusorauslässen (6) für reine Luft zur Einführung von durch eine Luftreiniger (4) gereinigter Luft in den Raum aufweisendes Luftzirkulationsmittel (3) enthält, wobei der säulenförmige Grundkörper (5) zur senkrechten Aufstellung in dem Raum bestimmt ist, dadurch gekennzeichnet, daß der säulenförmige Grundkörper (5) die Höhe des Raumes hat und daß der Luftführungskanal mit der Oberseite des säulenförmigen Grundkörpers (5) so verbunden ist, daß der Luftführungskanal mit flacher Oberseite horizontal von dem säulenförmigen Grundkörper aus, mit seiner flachen Oberseite die Decke (9) des Raumes berührend, über die Raumdecke verläuft, daß die Luftdiffusorauslässe (6) entlang dem Luftführungskanal angeordnet sind und daß der Luftreiniger (4) zwischen dem Luftzirkulationsmittel (3) und den Luftdiffusorauslässen (6) angeordnet ist.

2. Ein Raum nach Anspruch 1, worin der Luftführungskanal (7) als Querschnitt die Form eines mit der kürzeren Längsseite nach unten weisenden Trapezes hat, das sich an beiden Kanalseiten verjüngt (Fig. 3), wobei der Luftführungskanal in der Raummitte verläuft.

3. Ein Raum nach Anspruch 1, worin der Luftführungskanal (7) als Querschnitt die Form eines mit der kürzeren Längsseite nach unten weisenden Trapezes hat, das sich nur an einer Kanalseite verjüngt (Fig.-4), während die andere Kanalseite mit der flachen Kanaloberseite einen rechten Winkel einschließt und worin der Luftführungskanal mit der Kante im Bereich des rechten Winkels einer Kante zwischen einer Raumwand und der Raumdecke zugeordnet ist.

4. Ein Raum nach einem der Ansprüche 1—3, in dem zwei säulenförmige Grundkörper (5, Fig. 10) einander gegenüberliegenden Wänden (9) des Raumes (R) zugeordnet sind und mit den Enden eines Luftführungskanales (7) verbunden sind, der entlang der Decke verläuft.

5. Ein Raum nach einem der Ansprüche 1—3, in dem der säulenförmige Grundkörper (5) in der Mitte einer Wand des Raumes (R) steht und sich horizontale Luftführungskanäle (7) von ihm aus in entgegengesetzte Richtungen entlang der Decke (9) zu einander gegenüberliegenden Seiten oder Enden des Raumes (R) erstrecken.

6. Ein Raum nach Anspruch 5, in dem zwei säulenförmige Grundkörper (5) an einander gegenüberliegenden Wänden (8) des Raumes (R) stehen und von den beiden säulenförmigen Grundkörpern jeder mit einem horizontalen Luftführungskanal (7) verbunden ist, dessen anderes Ende mit dem säulenförmigen Grundkörper (5) verbunden ist, der in der Mitte der Wand (8) zwischen den einander gegenüber liegenden genannten Wänden des Raumes (R) steht.

## Revendications

1. Pièce (R) adptée pour servir de pièce propre, un appareil (1) de purification de l'air étant installé à l'intérieur et comprenant un corps (5) en forme de colonne dans lequel sont logés des moyens (3) de circulation d'air communiquant avec une entrée d'air (2) et alimentant au moins un conduit (7) comportant des sorties (6) de diffusion d'air propre, de façon à distribuer dans la pièce de l'air purifié par un purificateur d'air (4), ledit corps (5) en forme de colonne étant disposé de sorte à se tenir dressé verticalement dans la pièce, laquelle est caractérisée en ce que le corps (5) en forme de colonne présente la même hauteur que la pièce et en ce que le conduit est relié au sommet dudit corps (5) en forme de colonne de telle sorte que ce conduit, qui comporte une surface supérieure plate, s'étende horizontale dudit corps en forme de colonne en travers du plafond (9) avec lequel vient en contact ladite surface supérieure du conduit, lesdites sorties (6) de diffusion d'air étant disposées le long dudit plafond et le purificateur (4) d'air étant logé entre les moyens (3) de circulation d'air et les orifices (6) de diffusion d'air.

2. Pièce selon la revendication 1, dans laquelle le conduit (7) présente en section une forme trapézoïdale inversée qui va en se restreignant des deux côtés du conduit (figure 3), le conduit étant disposé pour s'étendre en travers du plafond dans le milieu de la pièce.

3. Pièce selon la revendication 1, dans laquelle le conduit (7) présente en section une forme trapézoïdale inversée qui va en se restreignant d'un côté seulement du conduit (figure 4), l'autre côté formant un coin à angle droit avec la surface plate supérieure dudit conduit, lequel est disposé de sorte à s'étendre le long du plafond avec l'angle de conduit reçu dans le coin situé entre le plafond et un mur de la pièce.

4. Pièce selon l'une quelconque des revendications 1 à 3, dans laquelle deux corps en forme de colonne (5), (figure 10) sont disposés de sorte à se dresser contre des murs (9) opposés de la pièce (R), lesdits corps en forme de colonne étant reliés aux extrémités opposées d'un conduit (7) s'étendant le long du plafond.

5. Pièce selon l'une quelconque des revendications 1 à 3, dans laquelle un corps (5) en forme de colonne se dresse au milieu ou à mi-chemin d'un mur (8) de la pièce (R) et comprend des conduits (7) horizontaux s'étendant à partir de lui en sens opposé, en travers du plafond (9), vers les côtés ou extrémités opposés de la pièce (R).

6: Pièce selon la revendication 5, dans laquelle deux corps (5) en forme de colonne sont disposés de sorte à se dresser contre des murs (8) opposés de la pièce (R), chacun étant relié à un conduit (7) horizontal dont l'autre extrémité est reliée au corps (5) en forme de colonne qui se dresse au milieu ou à mi-chemin du mur (8) situé entre lesdits murs opposés de la pièce (R).

0 107 298

FIG. 1

FIG. 2

FIG. 3

FIG. 4

FIG.5

FIG.6

FIG.7

FIG. 8

FIG. 9

*FIG.10*

*FIG.11*

## FIG. 12